# EUROPÄISCHE PATENTSCHRIFT

(11) **EP 1 910 670 B1**
(45) Veröffentlichungstag und Bekanntmachung des Hinweises auf die Patenterteilung: **28.12.2011**
(21) Anmeldenummer: 06762842.0
(22) Anmeldetag: 26.07.2006
(51) Int. Cl.: F03D 7/02

(54) **WINDENERGIEANLAGE MIT EINZELPITCHEINRICHTUNGEN**
WIND POWER PLANT COMPRISING INDIVIDUAL PITCH DEVICES
EOLIENNE A SYSTEMES DE CALAGE INDIVIDUELS

(30) Priorität: 26.07.2005 DE 102005034899
(43) Veröffentlichungstag der Anmeldung: 16.04.2008
(73) Patentinhaber: REpower Systems AG, 22335 Hamburg (DE)
(72) Erfinder: KRÜGER, Thomas, 24784 Westerrönfeld (DE)
(74) Vertreter: Glawe, Delfs, Moll
(86) Internationale Anmeldenummer: PCT/EP2006/007410
(87) Internationale Veröffentlichungsnummer: WO 2007/012487

(56) Entgegenhaltungen:
- WO-A-02/44561
- WO-A-03/052973
- WO-A-2005/021962
- WO-A-2005/111414
- WO-A-2006/069573
- DE-B3-102004 005 169

## Beschreibung

Die Erfindung betriff eine Windenergieanlage und ein Verfahren zu deren Betrieb wie in den Oberbegriffen der Ausprüche definiert. Solche Windenergieanlagen sind z.B. aus der WO 02/44561 oder der WO 2005/021 962 bekannt.

Windenergieanlagen, zumal solche höherer Leistungsklassen, werden in zunehmendem Umfang mit Rotoren versehen, deren Rotorblätter in ihrem Anstellwinkel verstellbar sind. Man spricht hierbei von pitchverstellbaren Rotorblättern. Sie bieten gegenüber den herkömmlicherweise bei kleineren Leistungsklassen dominierenden Windenergieanlagen mit festen Rotorblättern, so genannten stallgeregelten Windenergieanlagen, den Vorteil, dass durch Verstellen der Rotorblätter die aus dem Wind entnommene und in das Rotor-/Generatorsystem der Windenergieanlage eingespeiste mechanische Leistung beeinflusst werden kann. Dies bietet insbesondere in dem Fall hoher Windgeschwindigkeit Vorteile sowohl hinsichtlich Wirkungsgrad wie auch Regelungsgüte gegenüber stallgeregelten Anlagen mit festen Rotorblättern. Ein weiterer großer Vorteil von Windenergieanlagen mit pitchverstellbaren Rotorblättern ist, dass im Falle einer Störung ein schnelles Notabfahren der Windenergieanlage durch Verstellen der Rotorblätter in eine Fahnenposition möglich ist. Im Fall von Störungen oder bei einer Außerbetriebsetzung aus Sicherheitsgründen, z. B. wegen starker Sturmwinde, kann damit erreicht werden, dass der Rotor sich wie eine Fahne verhält und kein Drehmoment mehr auf die Rotorwelle bzw. den Generator ausübt.

Zur Bewirkung der Verstellung der Rotorblätter sind verschiedene Systeme bekannt geworden. Zum einen gibt es so genannte Zentralpitcheinrichtungen, bei denen mittels eines in der Gondel der Windenergieanlage oder in der Nabe des Rotors angeordneten Aktuators meist auf hydraulischem Weg eine gemeinsame Verstellung der Rotorblätter erreicht wird. Solche Zentralpitcheinrichtungen haben den Vorteil, dass sie hinsichtlich ihrer Regelung einfach sind und vom Aufbau her meist wenig aufwendig sind. Zum anderen ist es bekannt, jeweils für ein Rotorblatt des Rotors eine Einzelpitcheinrichtung zur Verstellung des Anstellwinkels dieses Rotorblatts vorzusehen. Die Einzelpitcheinrichtungen sind meist hydraulisch oder elektrisch wirkend ausgeführt, und werden von einer übergeordneten Zentralsteuereinrichtung der Windenergieanlage angesteuert. Die Ansteuerung kann dabei derart erfolgen, dass die Rotorblätter gemeinsam (kollektiv) betätigt werden, oder dass sie einzeln (zyklisch) über eine Rotorumdrehung hinweg verstellt werden. Außer der Möglichkeit der zyklischen Verstellung bieten Einzelpitcheinrichtungen weiter den Vorteil, dass sie eine unabhängige Verstellung auch im Notbetrieb bei Ausfall von Anlagenkomponenten ermöglichen. So kann selbst bei Ausfall einer Einzelpitcheinrichtung noch mit den übrigen der Rotor im Wesentlichen in eine Fahnenstellung gebracht werden, so dass höchstens noch ein geringes Moment auf den Generator einwirkt. Derartige Windenergieanlagen sind aus der DE-A-197 39 164 bekannt.

Ein Nachteil der bekannten Windenergieanlagen mit verstellbaren Rotorblättern ist, dass eine hohe.mechanische Belastung bei der Notverstellung hervorgerufen werden kann. Durch schnelles Verstellen der Rotorblätter bei noch laufendem Rotor erfolgt eine nahezu sprungartige Veränderung des Längsschubs, wodurch der Unterbau zu ungünstigen Schwingungen angeregt werden kann. Dies kann dadurch verstärkt werden, dass bei Einzelpitcheinrichtungen die Rotorblätter verschieden schnell betätigt werden, wodurch es zu Unwucht und weiteren Belastungen kommen kann.

Ausgehend von dem zuletzt genannten Stand der Technik liegt der Erfindung die Aufgabe zu Grunde, eine Windenergieanlage der eingangs genannten Art derart zu verbessern, dass sie im Betrieb ein sicheres Abfahren bei Vermeidung gefährlicher Belastungen im Störfall ermöglicht.

Die erfindungsgemäße Lösung liegt in einer Windenergieanlage bzw. einem Verfahren mit den Merkmalen der unabhängigen Ansprüche. Vorteilhafte Weiterbildungen sind Gegenstand der abhängigen Ansprüche.

Die Erfindung fußt auf dem Gedanken, dass die Einzelpitcheinrichtungen so ausgebildet sind, dass sie Störfälle selbsttätig erkennen können, und daraufhin im Störfall die Rotorblätter in die Abschaltposition bewegen, ohne dabei von einem entsprechenden Signal der Zentralsteuereinrichtung abhängig zu sein. Die Einzelpitcheinrichtungen sind also befähigt, einen Störfall autark zu erkennen und entsprechend zu reagieren, d. h. das ihnen jeweils zugeordnete Rotorblatt in die sichere Abschaltposition zu fahren. Dabei wird sowohl das Verstellen der Rotorblätter im Störfall wie auch im Normalbetrieb überwacht, so dass eventuell auftretende Abweichungen vom Sollzustand direkt kontrolliert und ausgeglichen werden können. Dazu wird die Bewegung der Rotorblätter den jeweiligen Erfordernissen entsprechend, die jeweils durch Windgeschwindigkeit, Turbulenz, Anströmungsrichtung oder Betriebszustand der Windenergieanlage bzw. der übrigen Einzelpitcheinrichtungen gegeben sein können, individuell angepasst. Damit kann dank der Erfindung ein optimales Verhalten der Rotorblattverstellung insbesondere für den Fall des Abfahrens, d. h. des Bewegens der Rotorblätter in die Abschaltposition, erreicht werden.

Durch die direkte und unabhängige Einwirkung auf die einzelnen Rotorblätter kann damit eine sichere Stillsetzung der Windenergieanlage auch bei Ausfall einzelner Komponenten oder bei Kommunikationsverlust erreicht werden. Ein Versagen einer oder mehrerer Einzelpitcheinrichtungen kann erkannt werden, und bei der Durchführung des Verstellens der Rotorblätter in die Abschaltposition berücksichtigt werden. Damit ist ein sicheres Abfahren der Windenergieanlage auch unter höchsten Belastungen und bei Ausfall von wesentlichen Komponenten, insbesondere auch der Pitchverstellkomponenten, dank der Erfindung ermöglicht. Weiter kann durch eine entsprechende Rückkopplung zwischen Einzelpitcheinrichtung und dem von ihr betätigten Rotorblatt die Belastung für das Rotorblatt an sich wie auch für die gesamte Windenergieanlage minimiert werden.

Verglichen mit einem unkontrollierten Abfahrens gemäß dem Stand der Technik können die beim Abfahren herkömmlicherweise auftretenden hohen Belastungen dank der erfindungsgemäßen, eine gewisse Eigenintelligenz bei der Erkennung und Behandlung von Störfällen aufweisen Einzelpitcheinrichtungen vermieden oder zumindest reduziert werden.

Vorzugsweise weist der Regler einen Selektor auf, der mit dem Störfalldetektor derart gekoppelt ist, dass je nach Betriebszustand ein alternatives Reglerregime verwendet wird. Unter Reglerregime werden hierbei das Führungs- und Störverhalten des Reglers bestimmende Größen verstanden, einschließlich Vorgabewerte bzw. -verläufe für die Führungsgrößen. Häufig ist es so, dass für die Regler verschiedene Reglerregime verfügbar sind. Mit dem Selektor ist es ermöglicht, abhängig von dem erkannten Störungszustand und gegebenenfalls unter weiterer Berücksichtigung der Umgebungsbedingungen, wie insbesondere Windstärke, Turbulenz oder Schräganströmung, ein variiertes Reglerregime auszuwählen. Dies kann durch Verändern von Parametern des Reglers realisiert sein, oder in Gestalt unterschiedlicher eingespeicherter Abfahrprofile, aus denen eines ausgewählt wird. Beispielsweise kann als Parameter ein Verstärkungsfaktor derart verändert sein, dass die Rotorblätter mit einer ersten Verstellgeschwindigkeit bis zum Erreichen eines kritischen Blattanstellwinkels betätigt werden, und danach der Selektor den Verstärkungswert so ändert, dass mit einer geringeren zweiten Verstellgeschwindigkeit weiter gefahren wird. Es kann aber auch alternativ oder zusätzlich vorgesehen sein, dass der Selektor auf ein anderes Abfahrprofil umschaltet. Zweckmäßigerweise ist ein Umschaltdetektor vorgesehen. Er ist dazu ausgebildet zu ermitteln, bei welchem Betriebspunkt das Reglerregime verändert wird.

Mit dem Umschaltdetektor kann das Verstellen der Rotorblätter in die Abschaltposition wie folgt durchgeführt werden. Zu Beginn des Abschaltvorgangs werden die Rotorblätter mit hoher Verstellgeschwindigkeit verfahren, um möglichst schnell die Fahnenstellung zu erreichen. Der Umschaltdetektor ermittelt einen kritischen Blattanstellwinkel, ab dem die aerodynamischen Verhältnisse am Rotor sich derart ändern, dass der durch die Kraft des Windes auf den Rotor der Windenergieanlage ausgeübte Längsschub sein Vorzeichen wechselt, also ein negativer Rotorschub entstünde. Würde nun mit unveränderter Verstellgeschwindigkeit wie im Stand der Technik weiter gefahren, so könnte es wegen des negativen Längsschubs zu einem starken Rückschwingen des Turms kommen, was im Fall bereits hoher struktureller Belastung der Windenergieanlage durch Wetterbedingungen oder Komponentenausfälle zu Beschädigungen oder gar zu Zerstörungen führen könnte. Um dies zu vermeiden, ermittelt der Umschaltdetektor den kritischen Blattanstellwinkel, und ändert danach die Reglerparameter so, dass die Verstellgeschwindigkeit erniedrigt wird. Der weitere Bremsvorgang läuft dann sanfter ab, der Aufbau von negativem Rotorschub wird stark reduziert, und der Gefahr von Beschädigungen wird damit entgegengewirkt. Der Umschaltdetektor ist dazu derart ausgebildet, dass er verschiedene anlagenspezifische und umgebungsspezifische Parameter als Eingangsgrößen verwendet, insbesondere die Windgeschwindigkeit, Drehzahl und Leistung. Diese Anpassung an die aktuellen Bedingungen ermöglicht eine signifikante Belastungsverringerung im Vergleich zu bekannten Systemen, bei denen im Störfall alle drei Rotorblätter vollkommen synchron geregelt mit vorgegebener, konstanter Blattverstellrate abgefahren werden.

Die Einzelpitcheinrichtung weist zweckmäßigerweise am Rotor angeordnete Messaufnehmer auf. Damit ist sie befähigt, autark und ohne Rückgriff auf die Zentralsteuereinrichtung und deren Sensoren bzw. Signalverarbeitung die erforderlichen Messsignale zu gewinnen. Als Messaufnehmer können insbesondere Rotorblattanstellwinkelsensor, Rotorpositionswinkelsensor, Rotordrehzahlgeber, Längsbeschleunigungssensor, Querbeschleunigungssensor, Drehbeschleunigungssensor, Zentrifugalbeschleunigungssensor, Brandmelder und/oder Belastungssensor an der Wurzel der Rotorblätter vorgesehen sein.

Zweckmäßigerweise ist die Einzelpitcheinrichtung mit einem Notmodul versehen, das bei Ausfall übriger Komponenten, insbesondere des Reglers, eine Notfahrt in die Abschaltposition bewirkt. Damit ist die Einzelpitcheinrichtung befähigt, bei einem Versagen des Reglers selbstständig mittels Notfahrt das Rotorblatt in seine Abschaltposition zu bringen. Die Notfahrt erfolgt zweckmäßigerweise ungeregelt, so dass ein Ausfall des Reglers oder von Elementen der Messeinrichtung ohne Einfluss auf die Notfahrt bleibt.

Es ist günstig, wenn die Einzelpitcheinrichtungen über eine direkte Kommunikationsverbindung innerhalb des Rotors miteinander verbunden sind. Damit wird erreicht, dass die Einzelpitcheinrichtungen auch bei Ausfall der Zentralsteuereinrichtung und/oder der zu ihr führenden Kommunikationsverbindung untereinander kommunizieren können. Eine direkte Datenübertragung hat den Vorteil, dass die Einzelpitcheinrichtungen sich miteinander direkt synchronisieren und Messsignale untereinander austauschen können. So brauchen nicht bei jeder Einzelpitcheinrichtung sämtliche Messsensoren vorhanden sein, es kann genügen, einen Messsensor jeweils nur einmal bei einer Einzelpitcheinrichtung vorzusehen. Die von diesem Sensor gelieferten Messdaten können über die direkte Kommunikationsverbindung an andere Einzelpitcheinrichtungen zu deren Nutzung angelegt sein. Auch können mehrfach vorhandene Sensoren über die Verbindung auf Plausibilität geprüft werden, um Sensorausfälle umgehend zu detektieren. Auf diese Weise lässt sich so die Sicherheit erhöhen, wie auch der dafür erforderliche Zusatzaufwand begrenzen.

Um im Fall des Ausfalls der Zentralsteuereinrichtung eine sichere Führung der einzelnen Einzelpitcheinrichtungen zu ermöglichen, ist vorzugsweise mindestens eine Einzelpitcheinrichtung mit einem Mastermodul versehen, das die übergeordnete Steuerung der anderen Einzelpitcheinrichtungen bei Ausfall der Zentralsteuerungseinrichtting bewirkt. Das verbessert nicht nur das Verhalten bei einem Ausfall der Zentralsteuereinrichtung, sondern auch bei einer eventuell temporären Unterbrechung der Kommunikationsverbindung mit der Zentralsteuereinrichtung. Das Mastermodul übernimmt in dieser Zeit die Führung der übrigen Einzelpitcheinrichtungen. Steht die Verbindung zur Zentralsteuereinrichtung wieder, so übernimmt jene; wird die Verbindung nicht wieder hergestellt, so löst das Mastermodul nach einer gewissen Wartezeit die Auslöseeinrichtung aus. Das Mastermodul ist vorzugsweise in den Regler der Einzelpitcheinrichtung integriert, kann aber auch als eigenständige Einheit in der Rotornabe ausgeführt sein. Im letzteren Falle ist zweckmä-βigerweise vorgesehen, dass die Kommunikation zwischen den Einzelpitcheinrichtungen über das Mastermodul geführt ist. Der Begriff der Zentralsteuereinrichtung umfasst all die Komponenten, welche die Funktionalität zur übergeordneten Steuerung der Windenergieanlage stellen. Sie kann auch aus mehreren verteilten Komponenten bestehen, die über ein Datennetzwerk (wie zum Beispiel ein Bussystem) miteinander gekoppelt sind.

Um die vorgenannten Überwachungen zweckmäßig durchführen zu können, weist der Störfalldetektor vorzugsweise mindestens ein Tochtermodul auf, das oder die zum Überwachen des Betriebszustands der anderen Einzelpitcheinrichtungen ausgebildet sind. Mittels des Tochtermoduls können insbesondere Signale betreffend ein Auslösen oder ein Ausfallen von einer der anderen Einzelpitcheinrichtungen erkannt oder übermittelt werden. Hat eine der anderen Einzelpitcheinrichtungen einen abnormalen Betriebszustand festgestellt, und deshalb die Auslöseeinrichtung betätigt und fährt somit das ihr zugeordnete Rotorblatt in die Abschaltposition, so können die übrigen Einzelpitcheinrichtungen dies durch ihr Tochtermodul jeweils erkennen. Sie sind damit befähigt, ebenfalls ihre Auslöseeinrichtungen zu betätigen, und damit ein synchrones Abfahren der Rotorblätter zu erreichen. Um eine vergleichbare Sicherheit auch bei dem Ausfall einer Einzelpitcheinrichtung zu erhalten, ist entsprechend vorgesehen, dass bei Ausfall oder Defekts einer der anderen Einzelpitcheinrichtungen die Auslöseeinrichtung betätigt wird. Schließlich ist vorzugsweise noch vorgesehen, dass im Fall einer Notfahrt von einer anderen Einzelpitcheinrichtung das Tochtermodul bewirkt, dass die übrigen Einzelpitcheinrichtungen ihre Auslöseeinrichtung betätigen. Mit dem erfindungsgemäßen Selektor ist es ermöglicht, dass in dem Fall eines Ausfalls oder einer Beeinträchtigung der Funktion einer Einzelpitcheinrichtung die anderen Einzelpitcheinrichtungen ihre Regler so modifizieren, dass trotz des Ausfalls bzw. der Beeinträchtigung ein sicheres und schonendes Abfahren gewährleistet ist.

Um eine besonders hohe Ausfallsicherheit, auch gegenüber eventuellen mechanischen Beschädigungen zu erreichen, ist vorzugsweise eine leiterlose Signalverbindung zwischen den Einzelpitcheinrichtungen für einen Auslöse-/Ausfallzustand vorgesehen. Dies hat den Vorteil, dass keine strukturellen Signalpfade erforderlich sind, sondern dass die Kommunikation direkt durch die Luft erfolgen kann. Beschädigungen von Kabelverbindungen oder deren Steckern, z. B. auf Grund von Überdrehzahl oder erheblichen Vibrationen, beeinträchtigen somit nicht die Sicherheit der Signalübertragung. Die leiterlose Signalverbindung ermöglicht eine Kommunikation darüber, dass mindestens eine Einzelpitcheinrichtung die Auslöseeinrichtung betätigt hat bzw. ausgefallen ist auch dann, wenn sowohl die regulären Kommunikationsverbindungen über die Zentralsteuereinrichtung wie auch die direkte Kommunikationsverbindung der Einzelpitcheinrichtungen untereinander ausgefallen sind. Es ist zweckmäßig, die leiterlose Signalverbindung möglichst störsicher auszuführen. Vorzugsweise ist sie als eine Lichtsignalverbindung ausgeführt. Zweckmäßigerweise ist die Lichtsignalverbindung so ausgebildet, dass die Signalübertragung kodiert erfolgt. Damit wird eine hohe Störsicherheit gegenüber Einflüssen durch Umgebungslicht oder Blitzen bei Gewitter erreicht. Durch unterschiedliche Kodierungen können auch weitere Signale, zum Beispiel Erkennung einer Notfahrt, übertragen werden.

Zweckmäßigerweise weist der Regler weiter ein Feinsteuermodul auf, das dazu ausgebildet ist, eine zyklische Verstellung der Rotorblätter derart vorzunehmen, dass die mechanische Belastung minimiert ist. Mittels des Feinsteuermoduls ist damit jede Einzelpitcheinrichtung selbständig in der Lage, ihr jeweiliges Rotorblatt zyklisch zu verstellen. Im Normalbetrieb erfolgt dies durch Datenübertragung von der Zentralsteuereinrichtung. Erfindungsgemäß kann die Einzelpitcheinrichtung die zyklische Verstellung mit ihrem Feinsteuermodul autark fortführen, auch wenn die Kommunikation der Zentralsteuereinrichtung unterbrochen ist. Über die Direktkommunikationsverbindung können die Einzelpitcheinrichtungen die zyklische Verstellung unabhängig von der Zentralsteuereinrichtung bestimmen, und damit auch Parameter des Feinsteuermoduls verändern, wie zum Beispiel die Amplitude und Phasenlage der zyklischen Verstellung. Die mit der zyklischen Blattverstellung gegebenen Vorteile bleiben damit erhalten. Dies gilt auch dann, wenn bei dem Stillsetzen der Anlage die Rotorblätter kollektiv in Richtung Abschaltposition verstellt werden; mittels des Feinsteuermoduls können weiterhin die für die Anlagenbelastung günstigen zyklischen Verstellungen im Überlagerungsbetrieb durchgeführt werden. Für ein hohes Maß an Redundanz ist vorzugsweise vorgesehen, dass das Feinsteuermodul mit einem dezentralen, der Einzelpitcheinrichtung zugeordneten Rotorpositionswinkelsensor versehen ist. Zweckmäßigerweise ist das Feinsteuermodul so weitergebildet, dass bei einem erkannten Ausfall einer der Einzelpitcheinrichtungen die übrigen die zyklische Verstellung derart modifizieren, dass die Belastungen der Windenergieanlage, insbesondere des Rotors und des Turms, minimiert sind. Dank des Feinsteuermoduls wird die zyklische Blattverstellung robust gegen den Ausfall von Einzelpitcheinrichtungen. Gerade in einer Situation mit einer ausgefallenen Einzelpitcheinrichtung und den damit verbundenen unsymmetrischen Lasten ist es besonders wertvoll, wenn die zyklische Verstellfunktionalität der verbleibenden Einzelpitcheinrichtungen dem Belastungsanstieg entgegen wirkt.

Die Erfindung bezieht sich weiter auf eine Windenergieanlage gemäss Anspruch 17. Diese Variante unterscheidet sich von der vorstehend erläuterten im Wesentlichen dadurch, dass im Normalbetrieb die Kontrolle der Funktionen des Rotors nicht dezentral durch die Einzelpitcheinrichtungen, sondern zentral, entweder durch die Zentralsteuerung oder durch ein zentrales Nabenkontrollsystem erfolgt. Gemäß dieser Variante der Erfindung verfügt das Nabenkontrollsystem über den Störfalldetektor. Der Störfall wird von dem Nabenkontrollsystem erkannt, und die Einzelpitcheinrichtungen werden wie erforderlich angesteuert. Eigene Regler an den Einzelpitcheinrichtungen sind dazu nicht erforderlich, sie können daher entfallen. Es können zusätzlich Störfalldetektoren an den Einzelpitcheinrichtungen vorgesehen sein, erforderlich ist dies aber nicht. Diese Variante der Erfindung zeichnet sich dadurch aus, dass sie in der Nabe mit dem Störfalldetektor eine Überwachungsfunktionalität vorsieht, die unabhängig von der Zentralsteuereinrichtung und der Kommunikationsverbindung mit ihr ist. Ein Abfahren ist damit auch dann gewährleistet, wenn die Zentralsteuereinrichtung und/oder die Kommunikationsverbindung mit ihr gestört ist. Der hierfür erforderliche Aufwand ist minimal, es genügt im einfachsten Fall, dass das Nabenkontrollsystem einen gemeinsamen Störfalldetektor für die Einzelpitcheinrichtungen aufweist. Das Nabenkontrollsystem kann auf eine Kernaufgabe beschränkt sein, nämlich auf die Überwachung des Störfalls. Dies ermöglicht einen einfachen Aufbau des Nabenkontrollsystems, mit entsprechenden Vorteilen für die Betriebssicherheit. Diese Variante der Erfindung eignet sich damit besonders als letzte Sicherheit, um ein kontrolliertes Abfahren der Windenergieanlage in jedem Fall sicherzustellen.

Es versteht sich, dass zweckmäßigerweise bei dieser Variante Messaufnehmer für das Nabenkontrollsystem, wie ein Rotordrehzahlgeber, ein Rotorpositionssensor, ein Längsbeschleunigungssensor, ein Querbeschleunigungssensor, ein Drehbeschleunigungssensor, ein Zentrifugalbeschleunigungssensor und/oder ein Brandmelder am Rotor vorgesehen sind. Damit wird das Nabenkontrollsystem weitgehend autark und unabhängig von der Zentralsteuereinrichtung. Bei einer zweckmäßigen Weiterbildung verfügt das Nabenkontrollsystem zusätzlich über ein Mastermodul. Dadurch wird erreicht, dass die eigentliche "Intelligenz" für die Steuerung der Funktion des Rotors in der Nabe autark angeordnet ist. Die Zentralsteuereinrichtung braucht in diesem Fall dann nur noch übergeordnete Aufgaben wahrzunehmen und wird vom Nabenkontrollsystem durch Statussignale über den jeweiligen Anlagenzustand informiert. Es sei angemerkt, dass das Nabenkontrollsystem auch zusätzlich vorgesehen sein kann, um bei einem Ausfall der entsprechenden Funktion in der Zentralsteuereinrichtung einen Weiterbetrieb zu gewährleisten. Die Erfindung bezieht sich weiter auf ein entsprechendes Verfahren zum Betrieb einer Windenergieanlage mit den Merkmalen des unabhängigen Verfahrensanspruchs 19. Vorteilhafte Weiterbildungen des Verfahrens sind Gegenstand der davon abhängigen Ansprüche.

Bezüglich einer näheren Erläuterung des Verfahrens und der dabei verwendeten Komponenten wird auf obige Ausführungen verwiesen.

Die Erfindung wird nachfolgend unter Bezugnahme auf die Zeichnung erläutert, in der vorteilhafte Ausführungsbeispiele dargestellt sind. Es zeigen:
- Fig. 1: eine schematische Gesamtansicht einer erfindungsgemäßen Windenergieanlage;
- Fig. 2: eine Vorderansicht darstellend Anstellwinkel der Rotorblätter und Rotorposition;

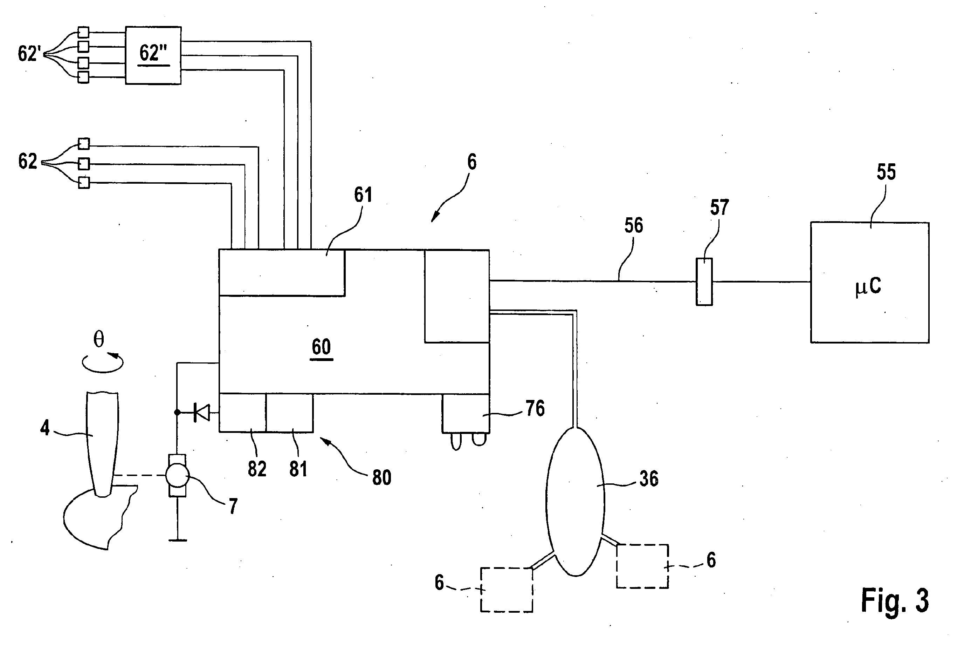

- Fig. 3: eine schematische Gesamtansicht einer Einzelpitcheinrichtung gemäß der Erfindung;

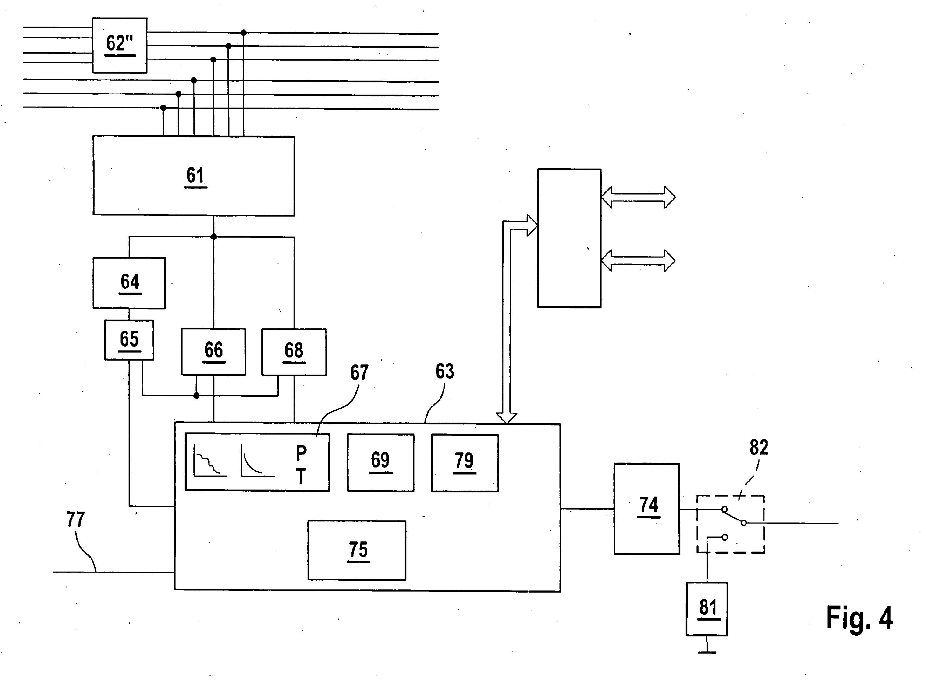

- Fig. 4: eine schematische Blockansicht des Reglers der in Fig. 3 dargestellten Einzelpitcheinrichtung;
- Fig. 5: eine Ausschnittsvergrößerung eines Teils eines Rotors im Bereich einer Blattwurzelaufnahme;
- Fig. 6: ein Diagramm darstellend die Verstellung des Blattanstellwinkels im Störfall; und

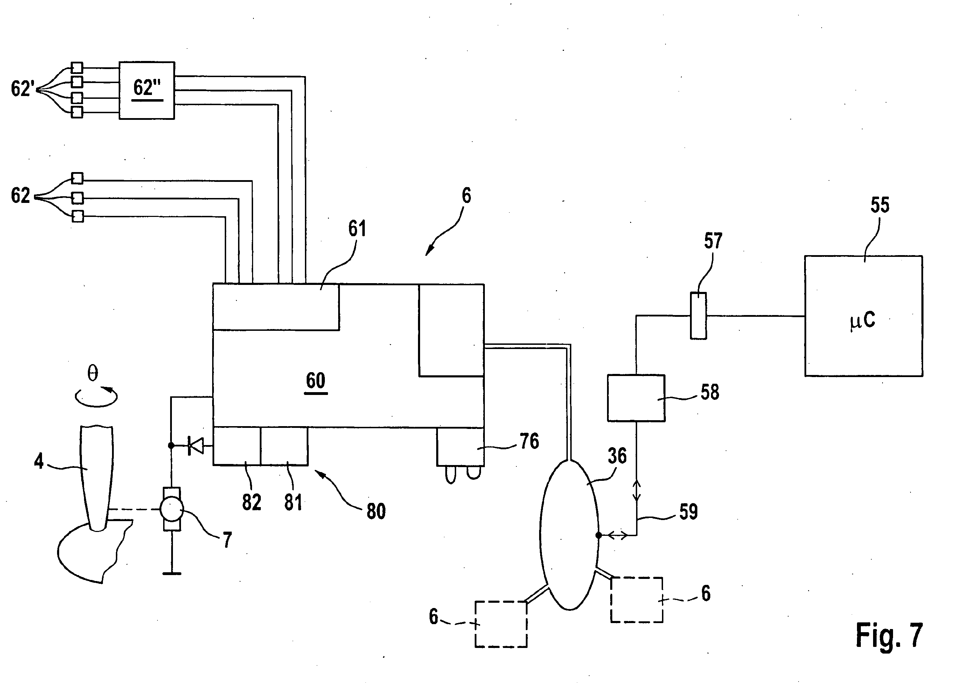

- Fig. 7: eine Ansicht ähnlich zu Fig. 3 bei einer Variante der Erfindung gemäß einem zweiten Ausführungsbeispiel.

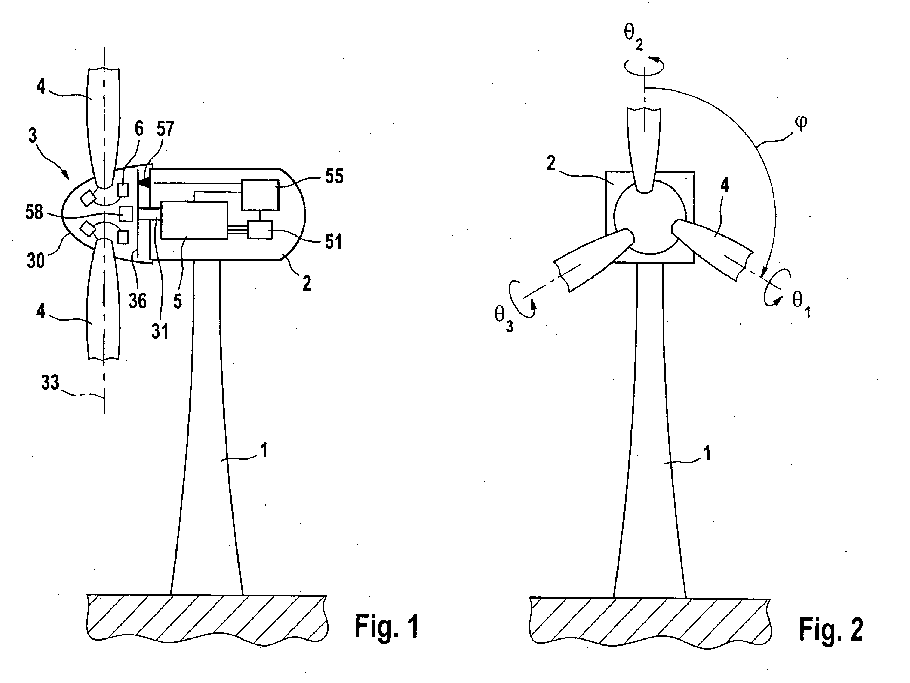

Das in Fig. 1 dargestellte Ausführungsbeispiel für eine erfindungsgemäße Windenergieanlage umfasst einen Turm 1 als Unterbau. An dessen oberen Ende ist in einer horizontalen Ebene (Azimutebene) eine Gondel 2 schwenkbar angeordnet. Zur Azimutverstellung ist eine Windnachführungseinrichtung (nicht dargestellt) vorgesehen. An einer Stirnseite der Gondel ist ein Rotor 3 mit einer Nabe 30 über eine Rotorwelle 31 drehbeweglich an der Gondel angeordnet. Über die Rotorwelle 31 ist ein in der Gondel 2 angeordneter Generator 5 angetrieben. Der Generator 5 wandelt die über die Rotorwelle 31 zugeführte mechanische Energie in elektrische Energie um, die über einen Umrichter 51 über nicht dargestellte Übertragungsverbindungen zur Einspeisung in ein Stromnetz zur Verfügung gestellt wird. Zur Steuerung der Windenergieanlage und zur Betriebsführung in Abhängigkeit von extern vorgebbaren Kriterien ist eine Zentralsteuereinrichtung 55 vorgesehen. Insoweit entspricht dies dem an sich bekannten Grundaufbau einer Windenergieanlage.

Der Rotor 3 weist mehrere (meist drei gleichmäßig über den Umfang verteilte) Rotorblätter 4 auf, die winkelverstellbar an einer Rotornabe 30 angeordnet. Unter winkelverstellbar wird hierbei der Winkel des Rotorblatts 4 zur Drehebene 33 des Rotors verstanden. Da die Rotorblätter 4 üblicherweise eine Verwindung aufweisen, wird für die Bestimmung des Anstellwinkels eine Hauptprofilsehne bestimmt, deren Winkel zur Rotordrehebene 33 maßgeblich ist. Das Rotorblatt 4 ist an seiner Blattwurzel 41 über ein Kugellager 43 um seine Längsachse drehbeweglich an der Rotornabe 30 befestigt. Zur Verstellung des Anstellwinkels, der im Folgenden mit θ bezeichnet wird, ist an jedem Rotorblatt 4 eine Einzelpitcheinrichtung 6 angeordnet.

Die Einzelpitcheinrichtung 6 umfasst einen Regler 60 und einen Verstellantrieb 7. Der Verstellantrieb 7 umfasst einen drehzahlregelbaren Elektromotor 71, der über ein Zahnradgetriebe 72 auf ein drehfest an dem Außenumfang der Blattwurzel 41 des Rotorblatts 4 angeordneten Zahnkranz 73 einwirkt. Über das Getriebe 72 und den Zahnkranz 73 werden die zum Schwenken des Rotorblatts 4 erforderlichen Kräfte bzw. Momente eingeleitet. Bewegt sich der Elektromotor 71, so dreht sich das Rotorblatt 4 je nach Drehrichtung des Elektromotors 71 zu einem kleineren oder größeren Anstellwinkel θ hin. Die Einzelpitcheinrichtung 6 umfasst weiter ein Notmodul 80. Dieses umfasst eine Energieversorgungseinrichtung 81 und einen Schalt- und Steuerblock 82. Dieser ist dazu ausgebildet, im Fall eines Versagens des Reglers 60 oder eines Ausfalls der regulären Energieversorgung das Rotorblatt 4 mittels der in der Energiespeichereinrichtung 81 gespeicherten Energie in eine sichere Abschaltposition zu fahren. Die sichere Abschaltposition ist die Fahnenposition. Sie ist definiert durch die Winkellage, bei welcher das Rotorblatt 4 dem parallel zur Rotorwelle 34 anströmenden Wind den geringsten Widerstand entgegensetzt. Im Regelfall wird bei dieser Abschaltposition von dem Rotorblatt 4 kein Drehmoment auf die Rotorwelle 31 übertragen, jedoch braucht dies nicht zwingend so zu sein. Der Verstellantrieb und/oder das Notmodul brauchen nicht zwingend elektrisch, sondern können auch hydraulisch ausgeführt sein.

Es wird nun der Aufbau der Einzelpitcheinrichtung 6 näher erläutert. Im Zentrum steht der Regler 60. Er ist über eine Kommunikationsverbindung 56 mit der Zentralsteuereinrichtung 55 verbunden. Die Kommunikationsverbindung 56 läuft über einen am Übergang zwischen Rotornabe 30 und Gondel 2 angeordneten Drehübertrager 57. Ferner ist eine weitere Kommunikationsverbindung angeschlossen, und zwar eine Direktkommunikationsverbindung 36. Sie ist innerhalb der Rotornabe 30 angeordnet und verbindet die den einzelnen Rotorblättern 4 zugeordneten Einzelpitcheinrichtungen 6 miteinander. Hierbei handelt es sich vorzugsweise um eine herkömmliche Kabelverbindung, bspw. einen schnellen seriellen Bus, die aus Redundanzgründen als Ring die Einzelpitcheinrichtungen direkt verbindet. Schließlich ist an dem Regler 60 noch eine Sende-/Empfangseinheit für eine Lichtsignalverbindung 76 angeordnet. Sie ist dazu ausgebildet, eine von kabelgebundenen Übertragungswegen unabhängige Kommunikation mit den übrigen Einzelpitcheinrichtungen 6 in der Rotornabe 30 zu bilden.

Die Einzelpitcheinrichtung 6 umfasst weiter eine Messeinrichtung 61, an die mehrere Messaufnehmer für unterschiedliche Parameter angeschlossen sind, die in ihrer Gesamtheit mit dem Bezugszeichen 62 bezeichnet sind. Weiter kann vorgesehen sein, dass von Messaufnehmern 62' erfasste Daten mittels einer Signalverarbeitung 62 " verarbeitet werden; dies kann insbesondere dazu dienen, nicht direkt messbare Größen aus anderen messbaren Größen zu ermitteln. Parameter sind bspw. die Drehzahl des Rotors 3, Anstellwinkels des von der jeweiligen Einzelpitcheinrichtung 6 betätigten Rotorblatts 4, Anstellwinkel der anderen Rotorblätter 4, Rotorpositionswinkel ϕ des Rotors 3, mechanische Belastung des Rotorblatts 4, Längs- bzw. Querbeschleunigung der Rotornabe 30, Mess- und Schätzwerte für die Windgeschwindigkeit und -richtung, sowie Werte für die erzeugte elektrische Leistung. Schließlich kann auch ein Vibrationsgeber zur Bestimmung von Unwuchten des Rotors 3 vorgesehen sein.

Der Regler 60 umfasst einen Reglerkern 63. Dieser ist dazu ausgebildet, mittels an sich bekannter Regelalgorithmen eine Verstellung des Anstellwinkels θ des zugeordneten Rotorblatts 4 gemäß den Vorgaben der Zentralsteuereinrichtung 55 durchzuführen. Der Reglerkern 62 weist einen Führungsanschluss 77 auf, an den Führungsgrößensignale von der Zentralsteuereinrichtung 55 angelegt sind. Er bestimmt aus den über die Messeinrichtung 61 zugeführten Eingangsgrößen, über die Kommunikationsverbindung 56 zugeführten Signalen, insbesondere den Führungsgrößensignalen, der Zentralsteuereinrichtung 55 und gegebenenfalls über weitere Signale über die direkte Kommunikationsverbindung 36 Ansteuersignale für den Verstellantrieb 7. Die Ansteuersignale können sein ein kollektiver Blattanstellwinkel, ein zyklischer Blattanstellwinkel mit Phaseninformation sowie Abfahrprofile. Die Abfahrprofil können von der Zentralsteuereinrichtung 55 fortlaufend in Abhängigkeit von den Umgebungs- und Betriebsbedingungen vorsorglich bestimmt und an die Einzelpitcheinrichtungen 6 übermittelt werden. Der Verstellantrieb 7 bewirkt, wie vorstehend erläutert, ein Verdrehen des Rotorblatts 4 um seine Längsachse zur Änderung des Anstellwinkels θ.

Der Regler 60 umfasst weiter einen Störfalldetektor 64. Dieser ist dazu ausgebildet, aus den von der Messeinrichtung 61 gemessenen bzw. ermittelten Parametern zu erkennen, ob bzw. wann ein abnormer Betriebszustand der Windenergieanlage vorliegt. Zu den von dem Störfalldetektor 64 ausgewerteten Parametern gehören insbesondere der Anstellwinkel θ des von der jeweiligen Einzelpitcheinrichtung 6 betätigten Rotorblatts 4, die Anstellwinkel θ der übrigen Rotorblätter 4, der Rotorpositionswinkel ϕ des Rotorblatts 4 bezogen auf die Umlaufbewegung um die Rotorachse, die mechanische Belastung des Rotorblatts 4, insbesondere in Gestalt des an der Blattwurzel 41 wirkenden Biegemoments und/oder die Beschleunigung der Rotornabe 30 in Richtung der Achse der Rotorwelle 31. Der Störfalldetektor 64 ist dazu ausgebildet, mittels voreinstellbarer Algorithmen zu erkennen, wenn ein abnormaler Betriebszustand vorliegt. Zweckmäßigerweise ist der Störfalldetektor 64 außerdem über die Kommunikationsverbindung 56 mit der Zentralsteuereinrichtung 55 verbunden. Er kann dazu ausgebildet sein, die Kommunikationsverbindung 56 zur Zentralsteuereinrichtung und/oder die Direktkommunikationsverbindung 36 zu den übrigen Einzelpitcheinrichtungen 4 zu überwachen.

An einen Ausgang des Störfalldetektors 64 ist eine Auslöseeinrichtung 65 angeschlossen. Sie wird betätigt, wenn der Störfalldetektor 64 eine Abweichung vom Sollzustand detektiert. Die Auslöseeinrichtung 65 bewirkt, dass der Regler 60 das Normalprogramm verlässt, und ein Abfahrprogramm ausführt mit dem Ziel, das Rotorblatt 4 in die Abschaltposition zu bringen. Dazu ist ein besonderes Reglerregime 67 vorgesehen. Das Reglerregime 67 ist gebildet aus Parametern des Reglerkerns 63 und Abfahrprogrammen, die das Verstellen des Anstellwinkels θ zum Erreichen der Abschaltposition beschreiben. Sind mehrere Abfahrprogramme vorhanden, so kann mittels eines Selektors 68 je nach der von dem Störfalldetektor 64 erkannten Abweichung ein geeignetes Abfahrprofil ausgewählt werden.

Es kann mehr als ein Abfahrprofil für die gesamte Verstellung bis hin zur Abschaltposition verwendet zu werden. Häufig wird es auch so sein, dass entweder ein Abfahrprofil modifiziert wird, oder in ein anderes Abfahrprofil gewechselt wird. Dazu ist ein Umschaltdetektor 66 vorgesehen. Dieser ist dazu ausgebildet, zu ermitteln, wann zweckmäßigerweise ein Umschalten in ein anderes Abfahrprofil oder wann eine Änderung eines Reglerparameters zu erfolgen hat. Um zu vermeiden, dass die einzelnen Einzelpitcheinrichtungen 6 zu unterschiedlichen Zeiten umschalten und dadurch zusätzliche Unsymmetrien im Rotor erzeugen, ist es von Vorteil, die Umschaltpunkte der drei Einzelpitcheinrichtungen 6 zu synchronisieren. Zweckmäßigerweise sind dazu die Umschaltdetektoren 66 der jeweiligen Einzelpitcheinrichtungen 6 derart gekoppelt, dass ein Umschalten aller Einzelpitcheinrichtungen 6 erfolgt bei Erkennung der ersten (oder auch erst der letzten) Überschreitung des kritischen Blattwinkels. Besonders vorteilhaft ist die Umschaltung, nachdem zwei Rotorblätter den kritischen Blattwinkel überschritten haben.

Der Regler 60 umfasst weiter einen Variator 69, der zum Verändern von Reglerparametern ausgebildet ist. Es können so im Störfall gezielt Regelungsparameter, wie Koeffizienten P oder Zeitkonstanten, in Abhängigkeit von dem Betriebszustand variiert werden. Dies ermöglicht es, während des laufenden Abfahrprogramms dynamische Änderungen vorzunehmen. Das Abfahrprogramm wird also nicht schematisch abgefahren, sondern es können je nach Erforderlichkeit auf Grund des gemessenen Betriebszustands Veränderungen vorgenommen werden. Dies sei am Beispiel der Drehzahl des Rotors 3 erläutert. Sie wird über die Messeinrichtung 61 kontinuierlich erfasst. Mittels des Umschaltdetektors 66 wird ermittelt, ob der durch das Verstellen der Rotorblätter 4 bewirkte Bremsvorgang des Rotors 3 planmäßig verläuft. Falls dies nicht sein sollte, sondern die Rotordrehzahl bspw. auf Grund stark auffrischenden Winds sogar ansteigen sollte, wird das Reglerregime modifiziert. Das kann in der Weise geschehen, dass der Variator 69 einen für ein Proportionalglied des Reglerkerns 63 vorgesehenen Koeffizient erhöht, so dass ein Ansteuersignal für den Verstellantrieb 7 ebenfalls vergrößert und eine größere als die ursprünglich vorgesehene Verstellgeschwindigkeit gefahren wird. Mittels dieser Modifikation kann flexibel auch auf Systemausfälle reagiert werden, die während des Abfahrens auftreten. So kann insbesondere ein Ausfall einer der Einzelpitcheinrichtungen 4 dadurch kompensiert werden, dass die übrigen Einzelpitcheinrichtungen 4 eine entsprechend höhere Verstellgeschwindigkeit anwählen.

Der Selektor 68 bzw. der Variator 69 können mit Vorteil auch zum Schutz der Windenergieanlage vor struktureller Überlastung verwendet werden. Ist bspw. eine Messeinrichtung für die Rotorblattbelastung an der Rotorblattwurzel 41 vorgesehen, so kann auch dieses Signal verwendet werden. Überschreitet es eine bestimmte Schwelle, so wird die Verstellgeschwindigkeit entsprechend zurückgenommen, um eine Überlastung des Rotors zu vermeiden. Weiter kann eine solche Messung mit Vorteil für den Umschaltdetektor 66 verwendet werden. So kann z. B. zur Bestimmung des kritischen Blattanstellwinkels zur Vermeidung negativem Rotorschubs auf den Sensor für die Rotorblattbelastung zurückgegriffen werden, da beim Erreichen des kritischen Blattanstellwinkels die aerodynamische Rotorblattbelastung den Wert Null annimmt. Im Falle eines Ausfalls eines Einzelpitchsystems kann die entstehende Unsymmetrie nicht vollständig kompensiert werden. Es wird jedoch auf ein Abschaltprofil umgeschaltet, welches den bestmöglichen Kompromiss zwischen Unsymmetrie und Bremswirkung ermöglicht. Es können bei Bedarf auch zusätzliche Stellsignale ausgegeben werden, zum Beispiel an eine Scheibenbremse (nicht dargestellt) für die Rotorwelle 31.

Mittels der Direktkommunikationsverbindung 36 sind die Einzelpitcheinrichtungen 6 der Rotorblätter 4 miteinander direkt innerhalb der Rotornabe 30 verbunden. Die Direktkommunikationsverbindung 36 hat den Vorteil, dass sie nicht wie die Kommunikationsverbindung 56 zur Zentralsteuereinrichtung 55 über einen Drehübertrager 57 geführt zu werden braucht. Zuverlässigkeitsprobleme, insbesondere solche auf Grund von Verschleiß, stellen sich damit nicht. Die Einzelpitcheinrichtung 6 kann dank der Direktkommunikationsverbindung 36 ein Signal an die übrigen Einzelpitcheinrichtungen 6 anlegen, wenn ihr Störfalldetektor 64 die Auslöseeinrichtung 65 betätigt. Damit kann auch in solchen Fällen, wenn ein Abfahren nicht zentral von der Zentralsteuereinrichtung 55 ausgelöst wird, ein synchrones Reagieren der Einzelpitcheinrichtungen 6 gewährleistet werden. Es ist ferner eine gegenseitige Überwachung der Einzelpitcheinrichtungen 6 ermöglicht. Damit können erweiterte Sicherheitsfunktionalitäten bei jeder Einzelpitcheinrichtung verwirklicht werden, bspw. ein Erkennen des Ausfalls einer anderen Einzelpitcheinrichtung 6. So kann ein Versagen, insbesondere ein Totalausfall, von einer der übrigen Einzelpitcheinrichtungen 6 erkannt und - sofern möglich - über die Kommunikationsverbindung 56 an die Zentralsteuereinrichtung 55 signalisiert werden. Versagt beispielsweise der Regler einer Einzelpitcheinrichtung 6, so dass der Störfalldetektor 64 über die Auslöseeinrichtung 65 ein ungeregeltes Abfahren dieser Einzelpitcheinrichtung 6 veranlasst, besteht eine vorteilhafte Strategie zur Vermeidung von Unsymmetrien darin, dass der Pitch-Istwert dieser Einzelpitcheinrichtung als Sollwert für die beiden anderen Einzelpitcheinrichtungen (ggf. mit einem Offset zur Kompensierung des Zeitverzugs) benutzt wird. Falls erforderlich wird dieser synchronen Verstellung noch eine zyklische Verstellung über ein Feinsteuermodul (s. folgenden Absatz) überlagert. Weiter kann über die Direktkommunikationsverbindung 36 ein Austausch von Messsignalen erfolgen. Damit ist es ermöglicht, die Messwerte der einzelnen Messsensoren 62 von einer der Einzelpitcheinrichtungen 6 den anderen Einzelpitcheinrichtungen 6 zur Verfügung zu stellen.

Schließlich ist noch ein Feinsteuermodul 74 vorgesehen. Es ist dazu ausgebildet, die Rotorblätter 4 während eines Umlaufs des Rotors einzeln zyklisch zu verstellen. Diese zyklische Verstellung überlagert sich mit der kollektiven Verstellung der Rotorblätter 4. Die zyklische Blattverstellung ermöglicht ein Ausgleich von Unsymmetrien, wie sie insbesondere durch unterschiedliche Anströmungsbedingungen über die Rotorfläche hinweg entstehen können. Solche können entstehen durch unterschiedliche Windstärke, -richtung oder Strömungsbedingungen über die von dem Rotor 3 überstrichene Fläche. Ferner können sich weitere Unterschiede durch im Vor- oder Nachlauf stehende benachbarte Windenergieanlagen ergeben. Mit einer zyklischen Blattverstellung kann auch unter Bedingungen mit unterschiedlichen Anströmverhältnissen die daraus resultierenden zusätzlichen Lasten auf die Windenergieanlage verringert werden. Dies ermöglicht insbesondere ein günstigeres Verhalten bei Schräganströmungen (vertikal und/oder horizontal), da durch Unsymmetrie entstehende Nick- oder Giermomente mittels der zyklischen Verstellung durch das Feinsteuermodul verringert werden können. Dies gilt auch für solche unsymmetrischen Zustände, wie sie durch Ausfälle von Komponenten verursacht werden. Fällt eine der Einzelpitcheinrichtungen 6 aus, so kann mit einer überlagerten zyklischen Verstellung der verbleibenden Einzelpitcheinrichtungen 6 die sich dadurch ergebende Unsymmetrie und damit die zusätzlich hohe Belastung der Windenergieanlage verringert werden. Entsprechendes gilt bei einem Ausfall der Windnachführungseinrichtung (nicht dargestellt).

Die Einzelpitcheinrichtungen arbeiten im Normalbetrieb abhängig von der Zentralsteuereinrichtung 55. Sie empfangen Steuer- und Führungssignale, insbesondere für den kollektiv an allen Rotorblättern einzustellenden Anstellwinkel, zyklische Blattanstellwinkel mitsamt Phaseninformation zur zusätzlichen individuellen Verstellung des Rotorblatts, sowie vorsorglich Abfahrprofile, die für die jeweiligen Umgebungs- und Betriebsbedingungen als günstig berechnet sind. Tritt nun ein Störfall auf, sei es ein Ausfall der Zentralsteuereinrichtung 55 oder von Teilen davon, ein Ausfallen der Kommunikationsverbindungen 36, 56, ein Ausfall des Netzes oder des Generators, abnorme Parameter wie insbesondere Überdrehzahl des Rotors 3 oder eine starke Beschleunigung des Rotors 3, so wird dies von dem Störfalldetektor 64 erkannt. Unterstellt man zum Beispiel einen Ausfall der Kommunikationsverbindung 56 wegen eines Defekts am Drehübertrager 57, so würde im Normalbetrieb die Störung von der Zentralsteuereinrichtung 55 erkannt und entsprechende Signale an die Einzelpitcheinrichtungen 6 übermittelt. Wegen des Ausfalls der Kommunikationsverbindung 56 ist die Signalübermittlung aber nicht mehr möglich. Erfindungsgemäß sind die Einzelpitcheinrichtungen 6 befähigt, den Störfall selbsttätig zu erkennen, und zwar mittels des Störfalldetektors 64. Im Fall des Erkennens löst der Störfalldetektor 64 die Auslöseeinrichtung 65 aus. Meist bedeutet dies ein Abfahren der Windenergieanlage, das heißt, die Rotorblätter 4 werden in die Abschaltposition gefahren. Anders als beim normalen Abfahren erfolgt das Verstellten der Rotorblätter bei der Notabschaltung im Störfall rasch, um schnell den sicheren Abschaltzustand zu erreichen.

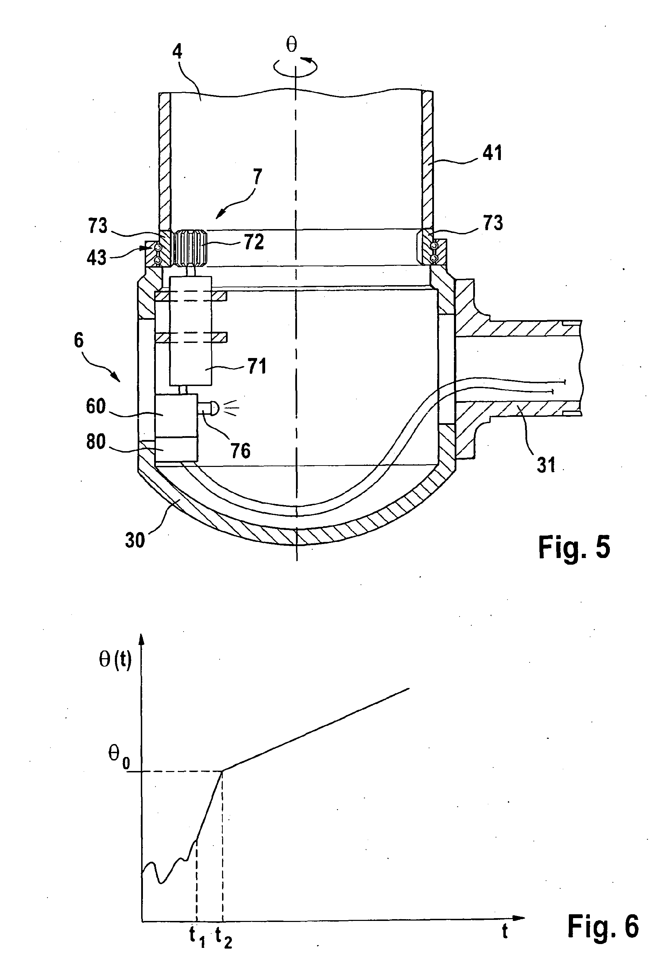

Es sei unterstellt, dass der Störfalldetektor 64 erkannt habe, dass ein Störfall in Gestalt einer Unterbrechung der Kommunikationsverbindung 56 aufgetreten sei. Er betätigt die Auslöseeinrichtung, die wiederum veranlasst, dass der Regler 60 in ein Reglerregime zum Abfahren wechselt, wobei das Abfahren zügig aber ohne Gefährdung der Sicherheit erfolgen soll. Wie dies geschieht, wird nachfolgend erläutert, und zwar am Beispiel einer Vermeidung von negativem Rotorschub. Wird das Rotorblatt 4 beim Abfahren schnell verstellt, so kann es in Abhängigkeit von dem jeweiligen Betriebszustand und den Umgebungsbedingungen passieren, dass sich die Richtung des von den Windkräften auf die Rotorwelle 31 ausgeübten Längsschubs umkehrt. Man spricht dann von negativem Rotorschub. Das Auftreten von negativem Rotorschub ist unerwünscht, da es eine Belastungsänderung für die Windenergieanlage darstellt, und insbesondere bei weichem Turm 1 zu einem Zurückschwingen führen kann, der nicht selten zu strukturellen Beschädigungen führt. Herkömmlicherweise besteht die Gefahr, dass beim schnellen Verstellen des Rotorblatts 4 ab einem kritischen Blattanstellwinkel der Rotorschub negativ wird. Dieser Gefahr kann zwar mit einer langsameren Verstellgeschwindigkeit begegnet werden, jedoch hätte dies den Nachteil, dass die Rotorblätter 4 erst später ihre Abschaltposition erreichen und damit der Rotor 3 langsamer abgebremst wird; dies kann jedoch zu Überdrehzahlen und damit zu Sicherheitsproblemen führen. In Fig. 6 ist der zeitliche Verlauf des Anstellwinkels θ dargestellt. Zum Zeitpunkt t₁ erkennt der Störfalldetektor 64 eine Störung und betätigt die Auslöseeinrichtung 65. Der Selektor 68 wählt zu Beginn des Abfahrvorgangs ein Reglerregime 67, das eine hohe Verstellgeschwindigkeit vorsieht. Erkennt der Umschaltdetektor 66 zum Zeitpunkt t₂ das Erreichen eines sich aus dem Betriebs- und Umgebungsbedingungen ergebenden kritischen Blattanstellwinkels θ₀, ab dem negativer Rotorschub droht, so veranlasst er eine Änderung des Reglerregimes 67 mittels des Selektors 68 oder der Regelparameter derart, dass sich eine niedrigere Verstellgeschwindigkeit ergibt. Dadurch wird das Auftreten von negativem Rotorschub verhindert, der weitere Bremsvorgang läuft dann sanfter ab und ist weniger belastend für die Windenergieanlage. Eine eventuell vorgesehene zyklische Blattverstellung mitsamt ihren positiven Eigenschaften auf die Stabilität des Systems kann dabei aufrecht erhalten werden. Die zyklische Blattverstellung ermöglicht es insbesondere bei starker Schrägeinströmung, wie z. B. bei umspringenden Windböen oder bei Ausfall der Windnachführungseinrichtung, das Auftreten hoher Nick- und Giermomente zu verringern. Dies ist gerade beim Notabfahren ein großer Vorteil, da auf Grund des abnormalen Betriebszustandes der Windenergieanlage nicht mehr unbedingt gewährleistet ist, dass die Gondel 2 genau in Windrichtung gedreht ist.

Selbstverständlich wird beim Abfahren nicht nur eine Größe, wie der Rotorschub, überwacht, sondern mehrere. Besondere Bedeutung hat die Überwachung der Drehzahl des Rotors 3. Steigt sie unplanmäßig, zum Beispiel wegen auffrischenden Winds an, so wird das Reglerregime mittels des Selektors 68 und Variators 69 weiter verändert. Das kann, wie bereits erläutert, in einem Wechsel des Abfahrprofils und/oder Änderung von Reglerparametern bestehen.

Erkennt der Störfalldetektor 64 der Einzelpitcheinrichtung 6, dass eine andere Einzelpitcheinrichtung ausgefallen ist, so wird die Auslöseeinrichtung 65 betätigt. Da generell bei dem Ausfallen einer der Einzelpitcheinrichtungen 6 mit dem Auftreten höherer Lasten auf Grund von Unsymmetrie zu rechnen ist, erfolgt mittels des Selektors 68 die Auswahl eines anderen, dafür geeigneten Abfahrprofils. Damit kann auch in diesem Fall erreicht werden, dass die auftretenden Belastungen reduziert sind. Es versteht sich, dass das Abfahrprofil nicht starr schematisch abgefahren wird, sondern dank des Umschaltdetektors 66 mittels des Selektors 68 und des Variators 69 Parameter bzw. Abfahrprofile verändert werden können. Entsprechendes gilt, wenn bei einer der Einzelpitcheinrichtungen 6 das Notmodul 80 ausgelöst hat und eine Notfahrt ausgeführt wird. Der Verstellvorgang ist im Notbetrieb nicht mehr zu beeinflussen. Die noch funktionierenden Einzelpitcheinrichtungen 6 wählen bzw. modifizieren ihr Reglerregime derart, dass die Belastungen für die Windenergieanlage möglichst gering bleiben.

Der Störfalldetektor 64 kann auch Teil eines Nabenkontrollsystems 58 sein. Dieses übernimmt die Überwachungsfunktion und bewirkt erforderlichenfalls das Abfahren, und zwar unabhängig von der Zentralsteuereinrichtung 55. Im Normalbetrieb erfolgt die Übermittlung von Steuerssignalen von der Zentralsteuereinrichtung 55 zu dem Nabenkontrollsystem 58 in der beschriebenen Weise über den Drehübertrager 57 und die Signalleitung 56. Der dem Nabenkontrollsystem 58 zugeordnete Störfalldetektor ist entsprechend dem Störfalldetektor 64 wie vorstehend beschrieben aufgebaut. Es fungiert nun aber als eine zentrale Erkennungseinheit, die gerade und nur die Überwachung in Bezug auf Störfälle vornimmt. Wird ein Störfall erkannt, so werden entsprechende Signale zum Abfahren an die Einzelpitcheinrichtungen angelegt. Das Nabenkontrollsystem 58 kann mit eigener, rotorfester Sensorik versehen sein, oder aber es greift über die Nabensteuerleitung 59 und die Direktkommunikationsverbindung 36 auf die Messaufnehmer 62, 62' der Einzelpitcheinrichtungen 6 zurück. In beiden Fällen ist insoweit ein autarker Betrieb des Nabenkontrollsystems 58 ermöglicht. Optional kann weiter vorgesehen sein, dass das Nabenkontrollsystem 58 ein Mastermodul aufweist. Damit ist nicht nur in Bezug auf die Überwachungsfunktion, sondern auch im Hinblick auf den Normalbetrieb eine weitgehende Unabhängigkeit des Nabenkontrollsystems 58 von der Zentralsteuereinrichtung erreicht. Dies hat insbesondere den Vorteil, dass Störungen der Verbindung, wie sie bspw. auf Grund des Drehübertragers 57 vorkommen können, für den Betrieb des Nabenkontrollsystems 58 insgesamt und den Betrieb der Einzelpitcheinrichtungen 6 im Besonderen ohne negativen Einfluss bleibt. Es versteht sich, dass bei einem Ausfall des Nabenkontrollsystems 58 die Einzelpitcheinrichtungen 6 in derselben Weise autark verfahren können, wie es vorstehend beschrieben ist im Zusammenhang mit einem Ausfall der Zentralsteuereinrichtung 55.

Um die kritische Kommunikation innerhalb der Nabe des Rotors 3 sicherer zu machen, ist die Lichtverbindung 76 vorgesehen. Sie dient dazu, das Bestätigen der Auslöseeinrichtung 65 einer Einzelpitcheinrichtung 6 oder das Abfahren im Notbetrieb durch Blitzcodes anzuzeigen. Dazu weist die Lichtsignalverbindung 76 einen Lichtemitter sowie einen Fotodetektor auf. Die Blitzcodes sind so gewählt, dass sie von Schwankungen des natürlichen Umgebungslichts oder von Gewittern sicher unterscheidbar sind. Damit ist auch bei einem vollständigen Kommunikationsausfall sowohl der Kommunikationsverbindung zur Zentralsteuereinrichtung 56 sowie auch der Direktkommunikationsverbindung, bspw. auf Grund einer Beschädigung der Rotornabe 30 durch Fremdkörper, eine Signalisierung des Abschaltens an alle Einzelpitcheinrichtungen 6 gewährleistet.

Schließlich kann die Einzelpitcheinrichtung 6 ein Monitoringmodul 79 aufweisen. Es ist dazu ausgebildet, selbsttätig eine Überwachung der Einzelpitcheinrichtung 6 auszuführen und dazu Signale betreffend den Betriebszustand und solche der Messeinrichtung 61 an die Zentralsteuereinrichtung 55 zu übermitteln. Das ist insbesondere dann zweckmä-βig, wenn die Einzelpitcheinrichtungen 6 im Normalbetrieb Steuer- und Führungssignale von der Zentralsteuereinrichtung 55 erhalten. In diesem Fall ist es erforderlich, dass die Zentralsteuereinrichtung 55 ein Signal erhält, wenn die Auslöseeinrichtung 65 betätigt ist. Damit kann verhindert werden, dass die autarke Blattverstellung durch das Mastermodul durch Signale von der Zentralsteuereinrichtung 55 übersteuert wird. Die Messeinrichtung 61 kann ferner ein Statistikmodul (nicht dargestellt) aufweisen. Damit können Messdaten über einen längeren Zeitraum gesammelt und einer statistischen Bewertung unterzogen werden. Dies ermöglicht eine kontinuierliche oder sogar prädiktive Überwachung. Die Möglichkeiten zur Erkennung von Fehlern erweitern sich damit, insbesondere können sie besser rechtzeitig erkannt werden.

## Patentansprüche

1. Windenergieanlage mit einem Generator (5) zur Erzeugung elektrischer Energie, einem den Generator (5) antreibenden Rotor (3) mit pitchverstellbaren Rotorblättern (4) und einer Zentralsteuerungseinrichtung,
wobei Einzelpitcheinrichtungen (6) für die Rotorblätter (4) vorgesehen sind, die einen Verstellantrieb (7), eine Kommunikationsverbindung (56) zur Zentralsteuereinrichtung (55) und einen Regler (60) umfassen, wobei die Rotorblätter (4) zum Abfahren der Windenergieanlage in eine Abschaltposition verstellbar sind,
**dadurch gekennzeichnet, dass**
die Einzelpitcheinrichtungen (6) Zusätzlich einen eigenen Störfalldetektor (64) und eine eigene Anslöseeinrichtung (65) umfassen, wobei der Störfalldetektor (64) zum Erkennen von abnormalen Betriebszuständen ausgebildet und mit der Auslöseeinrichtung (65) verbunden ist, die ein Verstellen des jeweiligen Rotorblatts (4) in eine Abschaltposition bewirkt.

2. Windenergieanlage nach Anspruch 1,
**dadurch gekennzeichnet, dass**
der Regler (60) einen Selektor (68) aufweist, der mit dem Störfalldetektor (64) derart gekoppelt ist, dass je nach Betriebszustand ein alternatives Reglerregime verwendet wird.

3. Windenergieanlage nach Anspruch 2,
**dadurch gekennzeichnet, dass**
der Regler (60) einen Umschaltdetektor (69) aufweist, der dazu ausgebildet ist, einen Umschaltpunkt für das Reglerregime zu bestimmen.

4. Windenergieanlage nach Anspruch 2 oder 3,
**dadurch gekennzeichnet, dass**
das Reglerregime Parameter des Reglers (60), insbesondere Verstärkungsfaktoren oder Zeitkonstanten, umfasst.

5. Windenergieanlage nach Anspruch 4,
**dadurch gekennzeichnet, dass**
das Reglerregime Abfahrprofile (67) umfasst.

6. Windenergieanlage nach einem der Ansprüche 2 bis 5,
**dadurch gekennzeichnet, dass**
der Selektor (68) und/oder der Umschaltdetektor (69) so ausgebildet sind, dass die Rotorblätter (4) mit einer ersten Verstellgeschwindigkeit bis zum Erreichen eines kritischen Blattanstellwinkels und danach mit einer geringeren zweiten Verstellgeschwindigkeit betätigt werden.

7. Windenergieanlage nach einem der vorangehenden Ansprüche,
**dadurch gekennzeichnet, dass**
die Einzelpitcheinrichtung (6) am Rotor (3) angeordnete Messaufnehmer (62) für eine Messeinrichtung (61) aufweist.

8. Windenergieanlage nach Anspruch 7,
**dadurch gekennzeichnet, dass**
als Messaufnehmer (62) ein Rotorblattanstellwinkelsensor, ein Rotordrehzahlgeber, ein Rotorpositionssensor, ein Längsbeschleunigungssensor, ein Querbeschleunigungssensor, ein Drehbeschleunigungssensor, ein Zentrifugalbeschleunigungssensor, ein Brandmelder und/oder ein Belastungssensor vorgesehen sind.

9. Windenergieanlage nach einem der vorangehenden Ansprüche ,
**dadurch gekennzeichnet, dass**
die Einzelpitcheinrichtung (6) mit einem Notmodul (80) versehen ist, das bei Ausfall übriger Komponenten, insbesondere des Reglers (60), eine Notfahrt in die Abschaltposition bewirkt.

10. Windenergieanlage nach einem der vorangehenden Ansprüche,
**dadurch gekennzeichnet, dass**
die Einzelpitcheinrichtungen (6) über eine direkte Kommunikationsverbindung (36) innerhalb des Rotors (3) miteinander verbunden sind.

11. Windenergieanlage nach einem der vorangehenden Ansprüche,
**dadurch gekennzeichnet, dass**
mindestens eine Einzelpitcheinrichtung (6) ein Mastermodul (75)- aufweist, das bei Ausfall der Zentralsteuerungseinrichtung (55) als Nabensteuermodul für die anderen Einzelpitcheinrichtungen (6) fungiert.

12. Windenergieanlage nach einem der vorangehenden Ansprüche,
**dadurch gekennzeichnet, dass**
der Störfalldetektor (64) mindestens ein Tochtermodul aufweist, das zum Erkennen eines Auslösens, Ausfallens und/oder einer Notfahrt von einer der anderen Einzelpitcheinrichtungen (6) ausgebildet ist.

13. Windenergieanlage nach einem der vorangehenden Ansprüche,
**dadurch gekennzeichnet, dass**
eine leiterlose Signalverbindung, insbesondere eine Lichtsignalverbindung (76), zwischen den Einzelpitcheinrichtungen (6) für einen Auslöse-/Ausfallzustand vorgesehen ist.

14. Windenergieanlage nach einem der vorangehenden Ansprüche,
**dadurch gekennzeichnet, dass**
der Regler (60) ein Feinsteuermodul (74) aufweist, das dazu ausgebildet ist, eine zyklische Verstellung der Rotorblätter (4) vorzunehmen.

15. Windenergieanlage nach Anspruch 14,
**dadurch gekennzeichnet, dass**
das Feinsteuermodul (74) dazu ausgebildet ist, die zyklische Verstellung unabhängig von den anderen Einzelpitcheinrichtungen (6) durchzuführen.

16. Windenergieanlage nach Anspruch 14 oder 15,
**dadurch gekennzeichnet, dass**
das Feinsteuermodul (74) mit einem dezentralen, der Einzelpitcheinrichtung (6) zugeordneten Rotorpositionssensor versehen ist.

17. Windenergieanlage mit einem Generator (5) zur Erzeugung elektrischer Energie, einem den Generator (5) antreibenden Rotor (3) mit pitchverstellbaren Rotorblättern (4) und einer Zentralsteuereinrichtung,
wobei Einzelpitcheinrichtungen (6) für die Rotorblätter (4) vorgesehen sind, die einen Verstellantrieb (7) umfassen, wobei die Rotorblätter (4) zum Abfahren der Windenergieanlage in eine Abschaltposition verstellbar sind,
und wobei die Einzelpitcheinrichtungen (6) Teil eines rotorfesten Nabenkontrollsystems (58) sind, das Messaufnehmer und eine Kommunikationsverbindung (58) zur Zentralsteuereinrichtung umfasst,
**dadurch gekennzeichnet, dass**
das Nabenkontrollsystem (58) Zuzätlich einen eigenen Störfalldetecktor (64) und eine eigene Auslöseeinrichtung (65) umfasst, wobei der Störfalldetektor (64) zum Erkennen von abnormalen Betriebszuständen ausgebildet und mit einer Auslöseeinrichtung verbunden ist, die ein Verstellen der Rotorblätter (4) mittels der zugeordneten Einzelpitcheinrichtung in eine Abschaltposition bewirkt.

18. Windenergieanlage nach Anspruch 17,
**dadurch gekennzeichnet, dass**
als Messaufnehmer ein Rotordrehzahlgeber, ein Rotorpositionssensor, ein Längsbeschleunigungssensor, ein Querbeschleunigungssensor, ein Drehbeschleunigungssensor, ein Zentrifugalbeschleunigungssensor und/oder ein Brandmelder vorgesehen sind.

19. Verfahren zum Betreiben einer Windenergieanlage mit einem Generator (5) zum Erzeugen elektrischer Energie, einem den Generator (5) antreibenden Rotor (3) mit pitchverstellbaren Rotorblättern (4) und einer Zentralsteuereinrichtung (55), wobei die Rotorblätter (4) mittels Einzelpitcheinrichtungen (6), die einen Verstellantrieb (7), eine Kommunikationsverbindung (56) zur Zentralsteuereinrichtung (55) und einen Regler (60) umfassen, bezüglich ihres Anstellwinkels verändert werden, und sie zum Abfahren der Windenergieanlage in eine Abschaltposition gebracht werden,
**gekennzeichnet durch**
dezentrales Erkennen eines abnormalen Betriebszustands **durch** Störfalldetektoren (64) in den Einzelpitcheinrichtungen und Betätigen einer Auslöseeinrichtung derart, dass **durch** Verstellen des jeweiligen Rotorblatts die Rotorblätter in die Abschaltposition gebracht werden.

20. Verfahren nach Anspruch 19,
**gekennzeichnet durch**
autarkes Selektieren eines alternativen Reglerregimes durch die Einzelpitcheinrichtungen (6).

21. Verfahren nach Anspruch20,
**gekennzeichnet durch**
autarkes Bestimmen eines Umschaltpunktes für das Reglerregime **durch** die Einzelpitcheinrichtungen (6).

22. Verfahren nach Anspruch 20 oder 21,
**gekennzeichnet durch**
Verwenden von Abfahrprofilen (67) und/oder Parametern des Reglers (60) für das Reglerregime.

23. Verfahren nach einem der Ansprüche 20 bis 22,
**gekennzeichnet durch**
Verwenden eines Reglerregimes, bei dem die Rotorblätter (4) mit einer ersten Verstellgeschwindigkeit bis zum Erreichen eines kritischen Blattanstellwinkels verstellt werden, und danach autarkes Anwählen eines variierten Reglerregimes mit einer geringeren zweiten Verstellgeschwindigkeit.

24. Verfahren nach einem der Ansprüche 19 bis 23,
**gekennzeichnet durch**
Betätigen der Verstelleinrichtung (7) mit einem Notmodul (80) der Einzelpitcheinrichtung (6).

25. Verfahren nach einem der Ansprüche 19 bis 24,
**gekennzeichnet durch**
direktes Kommunizieren der Einzelpitcheinrichtungen (6) über eine direkte Kommunikationsverbindung (36) innerhalb des Rotors (3).

26. Verfahren nach einem der Ansprüche 19 bis 25,
**gekennzeichnet durch**
Durchführen des dezentralen Erkennens derart, dass ein Auslösen, ein Ausfall und/oder eine Notfahrt einer anderen Einzelpitcheinrichtung (6) erfasst wird.

27. Verfahren nach einem der Ansprüche 19 bis 26,
**gekennzeichnet durch**
gesondertes Signalisieren eines Auslöse-/Ausfallzustands, insbesondere mittels Lichtsignalen.

28. Verfahren nach einem der Ansprüche 19 bis 27,
**gekennzeichnet durch**
dezentrales Bestimmen einer zyklischen Verstellung für jedes Rotorblatt (4) derart, dass die mechanische Belastung minimiert ist.

29. Verfahren nach Anspruch 28,
**gekennzeichnet durch**
gesondertes Durchführen der zyklischen Verstellung für jede Einzelpitcheinrichtungen (6) unabhängig voneinander.

## Claims

1. Wind energy installation having a generator (5) for production of electrical energy, a rotor (3) which drives the generator (5) and has variable pitch rotor blades (4) and a central control device,
with individual pitch devices (6) being provided for the rotor blades (4), which comprise an adjustment drive (7), a communication link (56) to the central control device (55) and a regulator (60), with the rotor blades (4) being adjustable in order to slow down the wind energy installation to a shut-down position,
**characterized in that**
the individual pitch devices (6) additionally comprise their own disturbance situation detector (64) and their own tripping device (65), with the disturbance situation detector (64) being designed to identify abnormal operating states and being connected to the tripping device (65) which moves the respective rotor blade (4) to a shut-down position.

2. Wind energy installation according to Claim 1,
**characterized in that**
the regulator (60) has a selector (68) which is coupled to the disturbance situation detector (64) such that an alternative regulator regime is used dependent on the operating state.

3. Wind energy installation according to Claim 2,
**characterized in that**
the regulator (60) has a switching detector (69) which is designed to determine a switching point for the regulator regime.

4. Wind energy installation according to claim 2 or 3,
**characterized in that**
the regulator regime comprises parameters for the regulator (60), in particular gain factors or time constants.

5. Wind energy installation according to Claim 4,
**characterized in that**
the regulator regime comprises slow-down profiles (67).

6. Wind energy installation according to one of Claims 2 to 5,
**characterized in that**
the selector (68) and/or the switching detector (69) are/is designed such that the rotor blades (4) are operated at a first adjustment rate until a critical blade pitch angle is reached, and are then operated at a lower, second adjustment rate.

7. Wind energy installation according to one of the preceding claims,
**characterized in that**
the individual pitch device (6) has measurement sensors (62), which are arranged on the rotor (3), for a measurement device (61).

8. Wind energy installation according to Claim 7,
**characterized in that**
a rotor blade pitch angle sensor, a rotor rotation speed transmitter, a rotor position sensor, a longitudinal acceleration sensor, a lateral acceleration sensor, a rotation acceleration sensor, a centrifugal acceleration sensor, a fire alarm and/or a load sensor are/is provided as a measurement sensor or sensors (62).

9. Wind energy installation according to one of the preceding claims,
**characterized in that**
the individual pitch device (6) is provided with an emergency module (80) which results in emergency movement to the shut-down position if other components, in particular the regulator (60), fail.

10. Wind energy installation according to one of the preceding claims,
**characterized in that**
the individual pitch devices (6) are connected to one another via a direct communication link (36) within the rotor (3).

11. Wind energy installation according to one of the preceding claims,
**characterized in that**
at least one individual pitch device (6) has a master module (75) which acts as a hub control module for the other individual pitch devices (6) if the central control device (55) fails.

12. Wind energy installation according to one of the preceding claims,
**characterized in that**
the disturbance situation detector (64) has at least one subsidiary module which is designed to identify tripping, failing and/or emergency movement by one of the other individual pitch devices (6).

13. Wind energy installation according to one of the preceding claims,
**characterized in that**
a wire-free signal link, in particular a light signal link (76) is provided between the individual pitch devices (6) for a tripping/failure state.

14. Wind energy installation according to one of the preceding claims,
**characterized in that**
the regulator (60) has a fine control module (74), which is designed to adjust the rotor blades (4) cyclically.

15. Wind energy installation according to Claim 14,
**characterized in that**
the fine control module (74) is designed to carry out the cyclic adjustment independently of the other individual pitch devices (6).

16. Wind energy installation according to Claim 14 or 15,
**characterized in that**
the fine control module (74) is provided with a local rotor position sensor associated with the individual pitch device (6).

17. Wind energy installation having a generator (5) for production of electrical energy, a rotor (3) which drives the generator (5) and has variable pitch rotor blades (4) and a central control device,
with individual pitch devices (6) being provided for the rotor blades (4) and comprising an adjustment drive (7), with the rotor blades (4) being adjustable in order to slow down the wind energy installation to a shut-down position,
and with the individual pitch devices (6) being part of a hub monitoring system (58) which is fixed to the rotor and comprises a measurement sensor and a communication link (58) to the central control device,
**characterized in that**
the hub monitoring system (58) additionally comprises its own disturbance situation detector (64) and its own tripping device (65), with the disturbance situation detector (64) being designed to identify abnormal operating states and being connected to a tripping device which adjusts the rotor blades (4) to a shut-down position by means of the associated individual pitch device.

18. Wind energy installation according to Claim 17,
**characterized in that**
a rotor rotation speed transmitter, a rotor position sensor, a longitudinal acceleration sensor, a lateral acceleration sensor, a rotation acceleration sensor, a centrifugal acceleration sensor and/or a fire alarm are/is provided as a measurement sensor or sensors.

19. Method for operation of a wind energy installation having a generator (5) for production of electrical energy, a rotor (3) which drives the generator (5) and has variable pitch rotor blades (4) and a central control device (55), with the pitch angle of the rotor blades (4) being varied by means of individual pitch devices (6) which comprise an adjustment drive (7), a communication link (56) to the central control device (55) and a regulator (60), and being moved to a shut-down position in order to slow down the wind energy installation,
**characterized by**
local identification of an abnormal operating state by disturbance situation detectors (64) in the individual pitch devices, and operation of a tripping device such that the rotor blades are moved to the shut-down position by adjusting the respective rotor blade.

20. Method according to Claim 19,
**characterized by**
autonomous selection of an alternative regulator regime by the individual pitch devices (6).

21. Method according to Claim 20,
**characterized by**
autonomous determination of a switching point for the regulator regime by the individual pitch devices (6).

22. Method according to Claim 20 or 21,
**characterized by**
use of slow-down profiles (67) and/or parameters of the regulator (60) for the regulator regime.

23. Method according to one of Claims 20 to 22,
**characterized by**
use of a regulator regime in which the rotor blades (4) are adjusted at a first adjustment rate until a critical blade pitch angle is reached, followed by autonomous selection of a varied regulator regime with a lower, second adjustment rate.

24. Method according to one of Claims 19 to 23,
**characterized by**
operation of the adjustment device (7) by an emergency module (80) of the individual pitch device (6).

25. Method according to one of Claims 19 to 24,
**characterized by**
direct communication between the individual pitch devices (6) via a direct communication link (36) within the rotor (3).

26. Method according to one of Claims 19 to 25,
**characterized by**
the local identification process being carried out such that tripping, a failure and/or an emergency movement of another individual pitch device (6) are/is detected.

27. Method according to one of Claims 19 to 26,
**characterized by**
separate signaling of a tripping/failure state, in particular by means of light signals.

28. Method according to one of Claims 19 to 27,
**characterized by**
local determination of cyclic adjustment for each rotor blade (4) such that the mechanical load is minimized.

29. Method according to Claim 28,
**characterized by**
cyclic adjustment being carried out separately for each individual pitch device (6), independently of one another.

## Revendications

1. Installation d'énergie éolienne, comprenant un générateur (5) pour produire de l'énergie électrique, un rotor (3) entraînant le générateur (5) et présentant des pales de rotor (4) à calage réglable et un dispositif de commande central,
sachant que, pour les pales de rotor (4), sont prévus des dispositifs de calage individuels (6) comportant un système d'entraînement réglable (7), une liaison de communication (56) avec le dispositif de commande central (55) et un contrôleur (60), sachant que, pour arrêter l'installation d'énergie éolienne, les pales de rotor (4) peuvent être réglées sur une position de découplage,
**caractérisée en ce que**
les dispositifs de calage individuels (6) comportent, en plus, un propre détecteur d'incident (64) et un propre dispositif de découplage (65), sachant que le détecteur d'incident (64) est réalisé pour reconnaître des états de fonctionnement anormaux et est relié au dispositif de découplage (65) qui provoque un réglage de la pale de rotor (4) respective sur une position de découplage.

2. Installation d'énergie éolienne selon la revendication 1,
**caractérisée en ce que**
le contrôleur (60) présente un sélecteur (68) qui est couplé au détecteur d'incident (64) de telle sorte qu'un régime de contrôleur alternatif est utilisé en fonction de l'état de fonctionnement.

3. Installation d'énergie éolienne selon la revendication 2,
**caractérisée en ce que**
le contrôleur (60) présente un détecteur de commutation (69) qui est réalisé pour déterminer un point de commutation pour le régime de contrôleur.

4. Installation d'énergie éolienne selon la revendication 2 ou 3,
**caractérisée en ce que**
le régime de contrôleur comporte des paramètres du contrôleur (60), en particulier des facteurs d'amplification ou des constantes de temps.

5. Installation d'énergie éolienne selon la revendication 4,
**caractérisée en ce que**
le régime de contrôleur comporte des profils d'arrêt (67).

6. Installation d'énergie éolienne selon l'une quelconque des revendications 2 à 5,
**caractérisée en ce que**
le sélecteur (68) et/ou le détecteur de commutation (69) est/sont réalisé(s) de telle sorte que les pales de rotor (4) sont actionnées à une première vitesse de réglage jusqu'à ce qu'un angle de calage de pale critique soit atteint et sont actionnées ensuite à une deuxième vitesse de réglage, inférieure.

7. Installation d'énergie éolienne selon l'une quelconque des revendications précédentes,
**caractérisée en ce que**
le dispositif de calage individuel (6) présente des capteurs de mesure (62), disposés sur le rotor (3), pour un dispositif de mesure (61).

8. Installation d'énergie éolienne selon la revendication 7,
**caractérisée en ce que**,
comme capteurs de mesure (62), il est prévu un capteur d'angle de calage de pale de rotor, un indicateur de vitesse de rotor, un capteur de position de rotor, un capteur d'accélération longitudinale, un capteur d'accélération transversale, un capteur d'accélération angulaire, un capteur d'accélération centrifuge, un détecteur d'incendie et/ou un capteur de charge.

9. Installation d'énergie éolienne selon l'une quelconque des revendications précédentes,
**caractérisée en ce que**
le dispositif de calage individuel (6) est muni d'un module de secours (80) qui provoque un réglage d'urgence sur la position de découplage en cas de défaillance des autres composants, en particulier du contrôleur (60).

10. Installation d'énergie éolienne selon l'une quelconque des revendications précédentes,
**caractérisée en ce que**
les dispositifs de calage individuels (6) sont reliés les uns aux autres par l'intermédiaire d'une liaison de communication (36) directe à l'intérieur du rotor (3).

11. Installation d'énergie éolienne selon l'une quelconque des revendications précédentes,
**caractérisée en ce**
**qu'**au moins un dispositif de calage individuel (6) présente un module maître (75) qui, en cas de défaillance du dispositif de commande central (55), sert de module de commande de moyeu pour les autres dispositifs de calage individuels (6).

12. Installation d'énergie éolienne selon l'une quelconque des revendications précédentes,
**caractérisée en ce que**
le détecteur d'incident (64) présente au moins un module esclave qui est réalisé pour reconnaître un déclenchement, une défaillance et/ou un arrêt d'urgence d'un des autres dispositifs de calage individuels (6).

13. Installation d'énergie éolienne selon l'une quelconque des revendications précédentes,
**caractérisée en ce**
**qu'**une liaison de signalisation sans conducteur, en particulier une liaison de signalisation lumineuse (76), est prévue entre les dispositifs de calage individuels (6) pour un état de déclenchement/défaillance.

14. Installation d'énergie éolienne selon l'une quelconque des revendications précédentes,
**caractérisée en ce que**
le contrôleur (60) présente un module de commande précise (74) qui est réalisé pour procéder à un réglage cyclique des pales de rotor (4).

15. Installation d'énergie éolienne selon la revendication 14,
**caractérisée en ce que**
le module de commande précise (74) est réalisé pour procéder au réglage cyclique indépendamment des autres dispositifs de calage individuels (6).

16. Installation d'énergie éolienne selon la revendication 14 ou 15,
**caractérisée en ce que**
le module de commande précise (74) est muni d'un capteur décentralisé de position de rotor, attribué au dispositif de calage individuel (6).

17. Installation d'énergie éolienne, comprenant un générateur (5) pour produire de l'énergie électrique, un rotor (3) entraînant le générateur (5) comportant des pales de rotor (4) à calage réglable et un dispositif de commande centrale,
sachant que, pour les pales de rotor, sont prévus des dispositifs de calage individuels (6) comportant un système d'entraînement réglable (7), sachant que, pour arrêter l'installation d'énergie éolienne, les pales de rotor (4) peuvent être réglées sur une position de découplage,
et sachant que les dispositifs de calage individuels (6) font partie d'un système de commande de moyeu (58), solidaire du rotor, qui comporte des capteurs de mesure et une liaison de communication (58) avec le dispositif de commande centrale,
**caractérisée en ce que**
le système de commande de moyeu (58) comporte, en plus, un propre détecteur d'incident (64) et un propre dispositif de déclenchement (65), sachant que le détecteur d'incident (64) est réalisé pour reconnaître des états de fonctionnement anormaux, et est relié à un dispositif de déclenchement qui provoque un réglage des pales de rotor (4) sur une position de découplage, au moyen du dispositif de calage individuel attribué.

18. Installation d'énergie éolienne selon la revendication 17,
**caractérisée en ce que**,
comme capteurs de mesure, il est prévu un indicateur de vitesse de rotor, un capteur de position de rotor, un capteur d'accélération longitudinale, un capteur d'accélération transversale, un capteur d'accélération angulaire, un capteur d'accélération centrifuge et/ou un détecteur d'incendie.

19. Procédé d'exploitation d'une installation d'énergie éolienne comportant un générateur (5) pour produire de l'énergie électrique, un rotor (3) entraînant le générateur (5), avec des pales de rotor (4) à calage réglable, et un dispositif de commande central (55), sachant que les pales de rotor (4) sont modifiées au niveau de leur angle de calage au moyen de dispositifs de calage individuels (6) comportant un système d'entraînement réglable (7), une liaison de communication (56) avec le dispositif de commande central (55) et un contrôleur (60), et sont amenées dans une position de découplage pour arrêter l'installation d'énergie éolienne,
**caractérisé par**
une reconnaissance décentralisée d'un état de fonctionnement anormal par des détecteurs d'incident (64) dans les dispositifs de calage individuels et par l'actionnement d'un dispositif de déclenchement de telle sorte qu'un réglage de la pale de rotor respective amène les pales de rotor dans la position de découplage.

20. Procédé selon la revendication 19,
**caractérisé en ce que**
l'on peut sélectionner de façon autonome un régime de contrôleur alternatif au moyen des dispositifs de calage individuels (6).

21. Procédé selon la revendication 20,
**caractérisé en ce que**
l'on peut déterminer de façon autonome un point de commutation pour le régime de contrôleur au moyen des dispositifs de calage individuels (6).

22. Procédé selon la revendication 20 ou 21,
**caractérisé en ce que**
des profils d'arrêt (67) et/ou des paramètres du contrôleur (60) sont utilisés pour le régime de contrôleur.

23. Procédé selon l'une quelconque des revendications 20 à 22,
**caractérisé par**
l'utilisation d'un régime de contrôleur, dans le cadre duquel les pales de rotor (4) sont réglées à une première vitesse de réglage jusqu'à ce qu'un angle de calage de pale critique soit atteint, et ensuite par une sélection autonome d'un régime de contrôleur modifié à une deuxième vitesse de réglage, inférieure.

24. Procédé selon l'une quelconque des revendications 19 à 23,
**caractérisé en ce que**
le dispositif de réglage (7) est actionné par un module de secours (80) du dispositif de calage individuel (6).

25. Procédé selon l'une quelconque des revendications 19 à 24,
**caractérisé par**
une communication directe des dispositifs de calage individuels (6) par l'intermédiaire d'une liaison de communication (36) directe à l'intérieur du rotor (3).

26. Procédé selon l'une quelconque des revendications 19 à 25,
**caractérisé en ce que**
la reconnaissance décentralisée est effectuée de telle sorte qu'il est détecté un déclenchement, une défaillance et/ou un arrêt d'urgence d'un autre dispositif de calage individuel (6).

27. Procédé selon l'une quelconque des revendications 19 à 26,
**caractérisé par**
une signalisation séparée d'un état de déclenchement/défaillance, en particulier au moyen de signaux lumineux.

28. Procédé selon l'une quelconque des revendications 19 à 27,
**caractérisé par**
une détermination décentralisée d'un réglage cyclique pour chaque pale de rotor (4) de telle sorte que la mise en charge mécanique soit minimisée.

29. Procédé selon la revendication 28,
**caractérisé par**
une exécution séparée du réglage cyclique pour chacun des dispositifs de calage individuels (6) indépendamment les uns des autres.
